# EUROPEAN PATENT SPECIFICATION

(11) **EP 3 876 700 B1**
(45) Date of publication and mention of the grant of the patent: **11.01.2023**
(21) Application number: 19820814.2
(22) Date of filing: 16.10.2019
(51) Int. Cl.: A01G 24/28, A01G 24/46

(54) **MOSS GROWTH SUBSTRATE**
MOOSWACHSTUMSSUBSTRAT
SUBSTRAT DE CROISSANCE DE MOUSSE

(30) Priority: 09.11.2018 FI 20180151 U
(43) Date of publication of application: 15.09.2021
(60) Divisional application: 21181082.5
(73) Proprietor: Suomen Puistopuutarhurit Oy, 70600 Kuopio (FI)
(72) Inventor: KÄMÄRÄINEN, Antti, 70600 Kuopio (FI)
(74) Representative: Hovinen, Jari Juhani
(86) International application number: PCT/FI2019/050738
(87) International publication number: WO 2020/094912

(56) References cited:
- EP-A1- 0 310 501
- EP-A1- 0 504 206
- WO-A1-2015/044526
- WO-A1-2018/009944
- US-A1- 2014 101 996
- US-A1- 2014 182 199

## Description

### FIELD OF THE INVENTION

The invention relates to a method of manufacturing a moss growth substrate. The invention also relates to a moss growth substrate consisting of compacted Sphagnum biomass, and to a method of growing plants in the moss growth substrate.

### BACKGROUND OF THE INVENTION

It is a trend in the horticultural industry to reduce the use of white peat which is regarded as a natural resource with a slow renewability rate. The concern about vanishing wetlands and increasing greenhouse gas emissions are the reasons why horticultural researchers are trying to find alternatives to white peat, complying with sustainable development and meeting the quality requirements of growing media and growing media production (e.g. Gaudig et.al. 2008, Pouliot et.al. 2015, Gaudig et.al. 2018).

It seems that different species of *Sphagnum* are suitable, in terms of their physical and chemical properties, for replacing white peat in plant production (Jobin et.al. 2014, Gaudig et.al. 2018). However, the water retention of *Sphagnum* biomass, and the mechanisms thereof, are significantly different from those of white peat, thereby offering possibilities to introduce novel applications, alongside the more traditional methods.

FI125943 describes growing medium structures comprising Sphagnum moss, a foam-laid method for their manufacture and the use thereof in horticulture, landscaping and forestry applications.

In *Sphagnum* biomass, two pore matrices specialized in conveying and storing water, act side by side, producing large amounts of water retention energy (Kämäräinen et.al. 2018). This phenomenon was publicized, somewhat earlier, in June 2018, in a magazine called Puutarha & Kauppa.

In Finland, machine-harvested domestic moss is already for sale, for use as a growing media, and to consumers (Biolan, horticultural moss). A peat-based growing medium, containing at least 10 % of undecomposed *Sphagnum,* is available to professional growers from Kekkilä PLC. *Sphagnum* can also be used as a substitute for perlite or vermiculite by adding it to peat-based growing medium mixtures. Thus, the use of single fibers or loose biomass may contribute to the ventilation properties of a growth substrate (Áube et.al. 2015).

It is known that the water content of growth substrates used in plant cultivation becomes, during the cultivation, significantly higher in the lower portions thereof than in the upper portions thereof. An excessive water content often restricts the oxygen supply to the roots of plants. This phenomenon manifesting in the growth substrates and usually indirectly caused by gravity is based on the diffusion slowing effect of water membranes, resulting in that the oxygen supply that the roots of the plants need for active nutrient-uptake and respiration becomes more difficult.

Thus, there is a need to develop growth substrates by means of which the prior art problems can be avoided.

### SUMMARY

The growth substrate according to the invention aims at improving the ornamental or yield potential of plants by allowing them to be cultivated in improved physical and chemical root conditions, in a growing medium entirely or partially composed of *Sphagnum* fibers. The invention aims at providing a novel bulk density-based structure for more productive growth substrates in primary production.

The invention also provides a solution to the known and common problem of the water content of the growth substrates used in plant cultivation becoming, during the cultivation, significantly higher in the lower portions thereof than in the upper portions thereof.

Thus, the invention relates to a method of manufacturing a moss growth substrate according to claim 1.

The invention also relates to the moss growth substrate according to claim 6.

The invention also relates to a method of growing a plant, according to claim 7.

The dependent claims describe preferred embodiments of the invention.

### FIGURES

Figure 1 is a cross-sectional view of a growth substrate according to a non-limiting embodiment of the invention, the growth substrate consisting of two layers of *Sphagnum* biomass compacted to different bulk densities,
Figure 2 shows a growth substrate according to a non-limiting embodiment of the invention, made of *S*. *fuscum* fiber,
Figure 3 shows a growth substrate according to a non-limiting embodiment of the invention, made of *S*. *magellanicum* fiber,
Figure 4 shows a growth substrate according to a non-limiting embodiment of the invention, with a rim around the top of the growth substrate,
Figure 5 shows a growth substrate according to a non-limiting embodiment of the invention, consisting of three layers of *Sphagnum* biomass,
Figure 6 is a cross-sectional view of an exemplary growth substrate manufactured by a method not according to the invention, the growth substrate consisting of one layer of *Sphagnum* biomass compacted to a desired bulk density, and
Figure 7 shows cucumbers growing in growth substrates according to the invention (Example A) or not according to the invention (Examples B and C), the growing taking place, for 2.5 weeks, in a growth substrate, without a protective pot (A: a layered structure where the upper *Sphagnum* biomass layer and the lower *Sphagnum* biomass layer have a bulk density of 60 g dm⁻³ and 50 g dm⁻³, respectively; B: where the *Sphagnum* biomass layer has a bulk density of 50 g dm⁻³), or with a protective pot (C: the *Sphagnum* biomass layer has a bulk density of 50 g dm⁻³).

### DESCRIPTION OF THE INVENTION

The idea of the growth substrate according to the invention is based on the discovery that the water retention of *Sphagnum* biomass increases systematically as its bulk density increases. Herein, "bulk density" refers to the density of a material, also taking into account any pores or inter-grain spaces. In practice, a dense moss structure retains more water than a loose one. By composing a portion of a continuous moss structure to be denser than the rest thereof it is possible to influence on the movements of water in the moss structure.

The growth substrate according to an embodiment of the invention consists of two or more moss fiber layers with different levels of compaction. These layers are assembled into a growth substrate where the layer having the lowest bulk density is the lowest one. Preferably, the bulk density of the lowest layer is at least 50 g dm⁻³. Thus, the bulk density increases in the height direction of the moss. Preferably, the bulk density of the uppermost layer is at most 80 g dm⁻³. This simple invention takes into account, better than the prior art, the changes of the gravitational potential, which has a significant effect on the total water potential in the growth substrate, along the height axis. In other words, it is possible to maintain more stable cultivation conditions by providing a higher water retention capacity in the upper portions of the growth substrate.

In an embodiment of the invention, the layers producing different amounts of water retention energy are made from different species of *Sphagnum.* Thus, the lower, middle and upper layers may consist of *S. magellanicum*/*media,* which is a coarser fiber, *S. riparium* and either *S. fuscum* or *S. capillifolium,* respectively.

In an embodiment of the invention, the increased shear resistance of the growth substrate is utilized in the manufacturing process by using a structure without a surrounding support structure, such as a protective pot, which slows down the exchange of gases on the sides and on the bottom. In this case, the top edge of the growth substrate according to the invention is preferably provided with a rim which is made from the same material and which facilitates watering.

In an embodiment of the invention, the gradients of bulk density and water retention are created by pressing mosses of the same species together, the portions pressed together having differing water contents. The water content has an effect on how *Sphagnum* is compacted and how it returns towards its original volume thereafter.

In an embodiment of the invention, the water retention gradient varying along a vertical axis, which is characteristic of the invention, is enhanced by using a longer moss fiber (higher gravimetric water retention) in the top than in the bottom layers of the product.

In an embodiment of the invention, biomass compacted to different bulk densities is added into looser moss, in smaller batches formed in different ways, as so-called buried satellites.

The invention contributes to the distribution of water and, therefore, also to the distribution of plant nutrients in an equipotential growth substrate. Further, the network of air-filled pores, which, owing to the more uniform water retention, extends more evenly through the growth substrate, ensures, better than any known implementation, aerobic root conditions during cultivation. The systematic use of different bulk densities in the same growth substrate makes it possible to better adjust the growth conditions of the root area and to ensure an aerobic environment favorable to crop yield, also in the lower portions of growth substrates.

Now it has also been discovered that plants can be grown in a growth substrate without a support structure, such as a protective pot when the growth substrate is manufactured by a method according to claim 1. In the following, the invention will be described with reference to the figures.

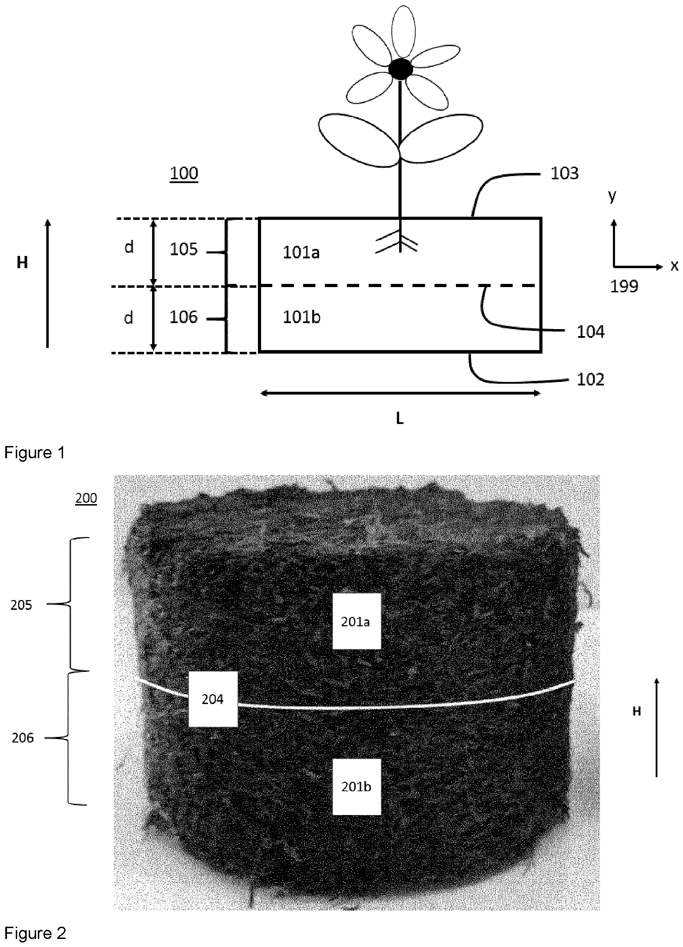

Figure 1 is a cross-sectional view of a growth substrate 100 according to a non-limiting embodiment of the invention. The figure also shows a plant planted in the upper portion 103 of the moss growth substrate. The moss growth substrate consists of two compacted layers of *Sphagnum* biomass, i.e. of a first layer of *Sphagnum* biomass 101a and of a second layer of *Sphagnum* biomass 101b. The bulk density of the first layer differs from the bulk density of the second layer, being higher than the bulk density of the second layer. The average bulk density of the portion 105 situated above a diagonal 104 drawn out in the middle of the growth substrate in the height direction H, i.e. in the direction of the y-axis of a coordinate system 199, and parallel to the x-axis of the coordinate system 199, deviates from the average bulk density of the portion 106 situated below the diagonal 104. Preferably, the difference is at least 8 %. In practice, this means that the dry bulk densities of the lower and the upper portions are, for example, 55g dm⁻³ and 65 g dm⁻³, in the same order. Preferably, the lowest layer 101b has a bulk density of at least 50g dm⁻³. An exemplary bulk density of the lowest layer is 55g dm⁻³. Preferably, the uppermost layer has a bulk density of at most 80g dm⁻³. An exemplary bulk density of the uppermost layer is 65g dm⁻³.

The halves of the growth substrate divided by the horizontal L diagonal 104 may also consist of several layers of *Sphagnum,* compacted by the same or different methods and creating, together, a density increasing in the height direction H, i.e. from the bottom 102 of the moss growth substrate towards the top 103 thereof, which is characteristic of the product, and, as a result thereof, a water retention gradient. This gradient can be verified by comparing the water retention of the halves 105 and 106 divided by the sectional line 104 at the middle of the vertical axis (at matric suction of -10 hPa). The bulk density gradient of the growth substrate can easily be verified by drying the halves (65 °C, 24 h, for example) and by weighing them.

Figure 2 shows a moss growth substrate 200 according to the invention, made from *S. fuscum* fiber and consisting of a first layer of a *Sphagnum* biomass 201a and of a second layer of the *Sphagnum* biomass 201b. The bulk density of the first layer deviates from the bulk density of the second layer. Preferably, the average bulk density of the portion 205 of the growth substrate situated above a diagonal 204 drawn out in the middle of the growth substrate deviates, by at least 8 %, from the average bulk density of the portion 206 of the growth substrate situated below the diagonal 204. Preferably, the bulk density of the lowest layer 201b is at least 50g dm⁻³, such as 55g dm⁻³. Preferably, the bulk density of the uppermost layer is at most 80g dm⁻³, such as 65g dm⁻³.

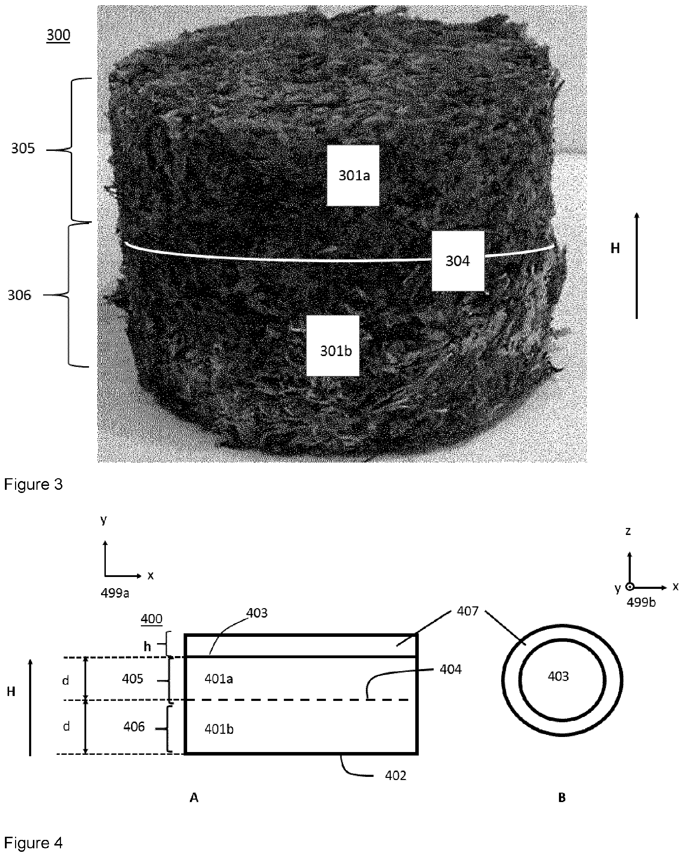

Figure 3 shows a moss growth substrate 300 according to the invention, made from *Sphagnum magellanicum* fiber and consisting of a first layer 301a of a *Sphagnum* biomass and of a second layer 301b of the *Sphagnum* biomass. The bulk density of the first layer deviates from the bulk density of the second layer. Preferably, the average bulk density of the portion 305 of the growth substrate situated above a diagonal 304 drawn out in the middle of the growth substrate deviates, by at least 8 %, from the average bulk density of the portion 306 of the growth substrate situated below the diagonal 304. In the figure, the different water retention capacities of the lower portion 306 and the upper portion 305 can be seen as a drier and lighter surface of the outer fibers of the lower portion. Preferably, the bulk density of the uppermost layer is at most 80g dm⁻³, such as 65g dm⁻³. Preferably, the bulk density of the lowest layer is at least 50g dm⁻³, such as 55g dm⁻³.

Figure 4 is a lateral (A) and a top (B) view of a moss growth substrate 400 according to an embodiment of the invention. The growth substrate 400 consists of a first layer 401a of *Sphagnum* biomass and a second layer 401b of *Sphagnum* biomass. The bulk density of the first layer deviates from the bulk density of the second layer. Preferably, the average bulk density of the portion 405 of the growth substrate situated above a diagonal 404 drawn out in the middle of the growth substrate in the height direction H, i.e. in the direction of the y-axis of a coordinate system 499a, and parallel to the x-axis of the coordinate system 499a deviates, by at least 8 %, from the average bulk density of the portion 406 of the growth substrate situated below the diagonal 404. Preferably, the bulk density of the uppermost layer is at most 80g dm⁻³, such as 65g dm⁻³. Preferably, the bulk density of the lowest layer is at least 50g dm⁻³, such as 55g dm⁻³.

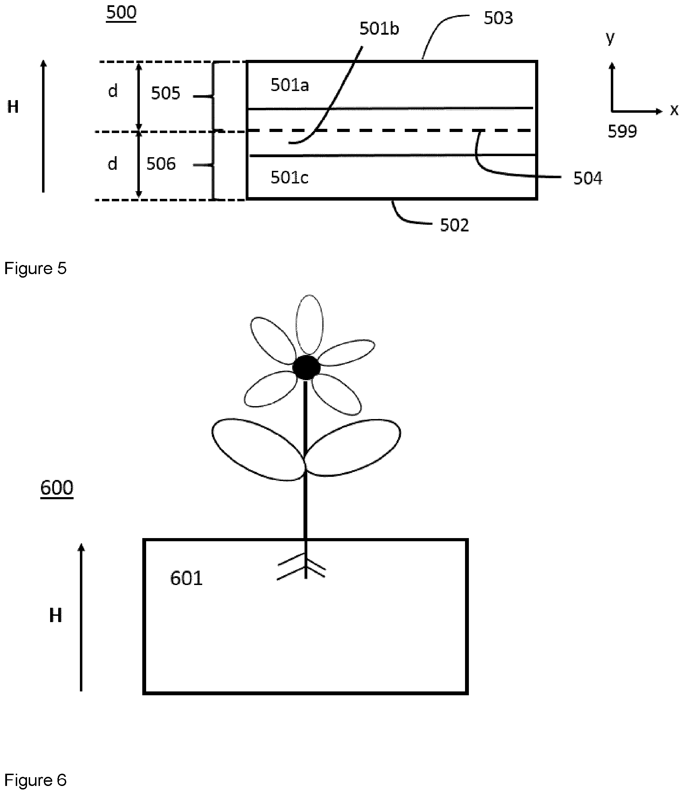

Figure 5 is a lateral view of a moss growth substrate 500 according to a non-limiting embodiment of the invention. It consists of three layers 501a, 501b and 501c of *Sphagnum* biomass. The layers are arranged in such a way that their bulk densities increase in the height direction H of the moss growth substrate, i.e. from the bottom 502 of the moss growth substrate towards the top 503 of the moss growth substrate. Preferably, the average bulk density of the portion 505 of the growth substrate situated above a diagonal 504 drawn out in the middle of the growth substrate in the height direction H, i.e. in the direction of the y-axis of a coordinate system 599, and parallel to the x-axis of the coordinate system 599, deviates, by at least 8 %, from the average bulk density of the portion 506 of the growth substrate situated below the diagonal 504. Preferably, the bulk density of the uppermost layer 501a is at most 80g dm⁻³, such as 65g dm⁻³. Preferably, the bulk density of the lowest layer is at least 50g dm⁻³, such as 55g dm⁻³.

The shear resistance of the growth substrate is preferably at least 1.5 N/cm², more preferably at least 1.8 N/cm². A sufficient shear resistance unnecessitates a separate protective pot for the growth substrate. In this case, the top 403 of the growth substrate is preferably provided with a watering rim 407 shaped from *Sphagnum* biomass and preferably having a height h under 20 mm, more preferably 5 to 19 mm, in the direction of the y-axis of the coordinate system 499a.

The invention also relates to a method of manufacturing the moss growth substrate. The method allows a plant to be grown in the growth substrate without any growth substrate support structures, such as a protective pot.

The method comprises compacting *Sphagnum* biomass to a bulk density of at least 50g dm⁻³ and saturating the compacted *Sphagnum* biomass with water.

Figure 6 is a cross-sectional view of a growth substrate 600 manufactured by a method according to a non-limiting embodiment not according to the invention. The figures shows a plant planted in the growth substrate. The growth substrate consists of one layer of *Sphagnum* biomass 601. The *Sphagnum* biomass layer has a dry bulk density of at least 50g dm⁻³, preferably 50 to 80 dm⁻³. An exemplary bulk density thereof is 55g dm⁻³.

According to the invention, there is more than one layer of *Sphagnum* biomass. In this case, the method comprises compacting two or more layers of *Sphagnum* biomass on top of each other, the bulk density of the *Sphagnum* biomass layers decreasing from the bottom towards the top and the uppermost *Sphagnum* biomass layer having a bulk density of at least 50g dm⁻³. Preferably, the compaction is carried out in a mold allowing the *Sphagnum* biomass to be easily compacted to a desired bulk density. According to an exemplifying embodiment, the method comprises compacting a first layer of *Sphagnum* biomass in a mold, to a first bulk density, and compacting a second layer of *Sphagnum* biomass on top of the first layer compacted in the mold, to a second bulk density which is lower than the bulk density of the first layer.One or more layers of *Sphagnum* biomass can be compacted on top of the second layer. The layers are compacted on top of the uppermost layer of *Sphagnum* biomass in the mold, the bulk density of the layer present in the mold always being higher than the bulk density of the layer added into the mold. Layers can be added until a desired bulk density gradient is achieved. The uppermost *Sphagnum* biomass layer has a bulk density of at least 50g dm⁻³, while, preferably, the lowest *Sphagnum* biomass layer has a bulk density of at most 80g dm⁻³.

Once a desired number of *Sphagnum* biomass layers have been compacted in the mold, the *Sphagnum* biomass is saturated with water. Finally, the moss growth substrate is removed from the mold and turned over, whereafter it can be used for growing plants.

The saturation of the *Sphagnum* biomass causes the pores of the growth substrate to be filled. Besides, the water retained in the growth substrate increases the mass of the growth substrate, and, thus, makes it easier to remove the growth substrate from the mold. Without saturation, the growth substrate is difficult to use unless the growth substrate is provided with a support. The suction keeping the growth substrate together is mainly generated by capillary forces by letting, after the saturation, any excess water to run out, assisted by gravity. Thereafter, the structure is removed from the mold, in a wet state, and dried to a lower water content without breaking the structure.

The method according to the invention preferably uses moss material limed to a desired pH value and having a dry matter content stabilized between 20 and 24 %. Thus, the outer pore matrix of the *Sphagnum* fibers is dry of so-called capillary water and, therefore, no free water is squeezed out of it even when compacted to the highest upper layer bulk densities (≤ 80 g/dm³) used in the embodiment. At this water content, the moss fiber is of sticky nature and retains its shape when compacted in the mold. Besides, the material is attached to the mold by stronger cohesion/adhesion forces than a drier material.

Any material retaining its shape and preferably having a smooth surface can be used as the mold of the growth substrate. Along with bulk densities, the geometry of the mold provides a way of influencing the movements of water retained in the equipotential growth substrate not having a protective pot. Compared to a cylindrical shape, a conical shape influences the movements of water during cultivation by reducing the hydrostatic potential expressed as a partial potential of the pressure potential, from the edges of the molded growth substrate towards its center. The bottom of the mold may allow depressions to be created, suitable for sowing or for a seedling cube that is planted in the surface of the growth substrate.

According to the invention, the bottom of the mold is provided with through-holes, allowing, when a finished growth substrate according to the embodiment is removed, replacement air to enter between the bottom of the mold and the growth substrate. In its simplest form, the mold can be a standard upwards-widening, conical and robust plant pot.

In the method, *Sphagnum* is compacted in the mold in layers, preferably at a dry matter content between 20 and 24 %. The compaction progresses from the highest to the lowest bulk density. Since the mold will be turned over, the mechanical compaction always takes place by constructing a looser layer on top of a denser one. The moss with a higher bulk density being structurally stronger than the loose one, the compaction of the looser layers does not cause significant changes in the bulk density of the lower portion. If it is desirable to increase the interconnecting forces between the different layers, it is possible to use a few individual long moss fibers (*S. media,* for example) vertically throughout the growth substrate structure. Once the last layer, which becomes the lowest layer, has been compacted, the moss growth substrate is carefully saturated by adding water, slowly until the mass flow passes through the holes provided in the bottom of the mold. When necessary, the saturation can be carried out by using a nutrient solution containing calcium, if preliming or placement of fertilizer are not desired. The saturation is necessary for increasing the total mass of water retained in the substrate and allows a sufficient amount of kinetic energy to be created for removing and sliding the growth substrate structure out of the mold when it is turned over. It is also possible to use plant-based anti-friction additives on the inner surface of the mold.

After the saturation, any excess water is allowed to exit through the holes of the bottom by gravity. When there no longer is any free water running out, the growth substrate structure is ready to be turned over on any desired surface. Once turned over, the mold can be knocked on the sides to detach the structure. After the mold has been removed, the growth substrate is ready for sowing.

When a standard protective pot is used in plant cultivation, continuous gas diffusion paths, which are of vital importance to the oxygen supply of the roots of the plant, extend, within the area defined by the protective pot, up to the surface of the substrate, and a few, theoretically, through the bottom holes of the protective pot. When using impermeable pots, the gas exchange of the growth substrate only takes place through its open surface and strongly restricted bottom area. Heavy watering into a growth substrate made in a standard protective pot may cause low oxygen concentrations in the root area which will be negatively reflected in the growth of the plant.

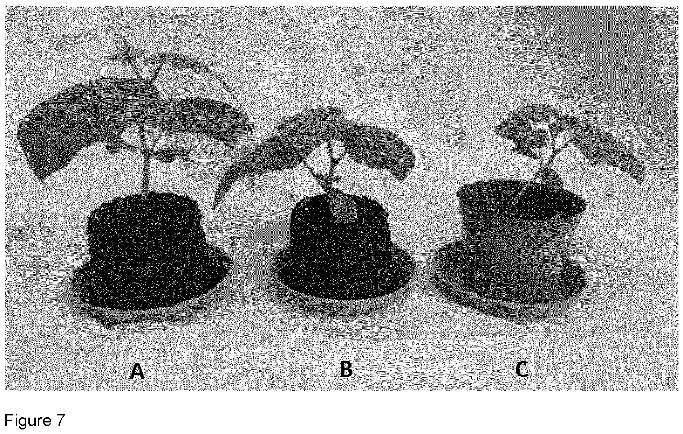

When the novel method of manufacturing a growth substrate structure is used, the previous ratios between the effective areas of the continuous gas diffusion-dispersion paths extending from the inner portions of the growing substrate to the atmosphere interface and of the discontinuous paths can be inverted so as to be more preferable for plant cultivation. The oxygen and carbon dioxide diffusion enabling and completely unrestricted area provided by the invention is many times vaster than in the previous passive cultivation applications. Besides, the method results in air-pruning which has an advantageous effect on the yield of the plants and where the tips of the roots (visible in figure 7), after having grown into the interface between the atmosphere and the moss pores, dry out and, further, branch out within the growth substrate.

When combined with an equipotential growth substrate structure, the method may preferably produce a higher plant crop yield by significantly enhancing the ventilation properties of the equipotential or equivalent bulk density growth substrate. The enhanced ventilation properties allow for passive cultivation at higher water concentrations without slowing the growth. If the ventilation properties are not growth limiting minimum factors during cultivation, the high water concentration maintained by the moss growth substrate has a preferable effect on the growth of the plants grown therein. The high water reservoir of the substrate slows down the concentration of pore water resulting from evapotranspiration. In other words, the high water reservoir slows down, between the waterings, the increase of osmotic potential energy of the pore water which has a disturbing effect on the water intake of the plant. As an added value, the use of the higher water reservoir enabled by the novel substrate structure extends the necessary watering interval and increases the cultivation reliability.

In an equipotential growth substrate not having a protective pot, maximum length *Sphagnum* fibers are used, as far as possible, instead of the physically manipulated (compressed) short *Sphagnum* fibers available on the market. The use of long fibers having a more continuous and integral fiber structure makes it possible to give the embodiment structural strength, allowing the moss to be used for plant cultivation without a protective pot. Exceptionally long moss fibers (such as *Sphagnum Media*) can be used as a portion of a structure made from another moss species by the method, for the purpose of giving additional structural strength and to bind layered structures together. Studies show that natural moss fibers have a higher gravimetric water retention than short fibers (Kämäräinen et al. 2018). Consequently, in the structure according to the invention, the matrix forces keeping the structure together are higher compared to a growth substrate structure made from structurally manipulated and short *Sphagnum* fibers.

According to the invention, the bottom of the mold is provided with through-holes, allowing, when a finished growth substrate according to this embodiment is removed, replacement air to enter between the bottom of the mold and the growth substrate. In its simplest form, the mold can be a standard upwards-widening, conical and robust plant pot.

In an embodiment of the invention, a porous, highly air-permeable and elevating bottom plate is used. This allows for effective gas exchange between the atmosphere and the growth substrate, also through the bottom of the growth substrate. In an embodiment of the invention, a flexible and fine-mesh fiber surrounding the growth substrate and resembling a net is used to prevent small moss particles from separating from the structure while it is drying. The net can be made sock-shaped, from low-friction material, for use in the mold or after removal from the mold. The invention also relates to a method of growing a plant, comprising planting the plant in a growth substrate according to the invention. Preferably, the growing takes place without a protective pot.

Figure 7 shows cucumbers passively cultivated for 2.5 weeks in growth substrates. On the left in figure 7, the growth substrate is a structure according to the invention consisting of two layers of *Sphagnum* biomass, the upper layer and the lower layer having a bulk density of 60 g dm⁻³ and 50 g dm⁻³, respectively. In the middle in figure 7, the growth substrate is a structure not according to the invention consisting of a layer of *Sphagnum* biomass with a bulk density of 50 g dm⁻³. On the right in figure 7, the growth substrate is a structure not according to the invention consisting of layer of *Sphagnum* biomass with a bulk density of 50 g dm⁻³, but the growing takes place in a protective pot. The following conclusions can be made from the results:
o the growing is more effective when the growing takes place without a protective pot,
o the growth substrates according to the invention do not require any support structures, such as a protective pot or the like,
o the growing is more effective in a growth substrate according to the invention which consists of more than one layer of *Sphagnum* biomass with different bulk densities, the bulk densities increasing from the bottom towards the top.

### Reference list

Áube, M., Quenum, M. & Ranasinghe, L. L. 2015. Charasteristics of Eastern Canadian cultivated Sphagnum and potential use as a substitute for perlite and vermiculite in peat-based horticultural substrates. Mires and Peat 16 (3): 1 -18.
Emmel, M. 2008. Growing ornamental plants in Sphagnum biomass. Acta Horticulturae 779: 173 - 1
Prior art:
   WO2018/009944 A1;
   US2014182199 A1;
   US2014/101996 A1;
   EP0310501 A1;
   EP0504206 A1. 78.

## Claims

1. A method of manufacturing a moss growth substrate, **characterized in that** it comprises
i. compacting a first layer (101a) of *Sphagnum* biomass to a bulk density of at most 80
g dm⁻³ wherein the bulk density is a density of a layer weighted after drying at 65 °C for 24 h and wherein the compacting takes place in a mold, the bottom of which comprises one or more through-holes,
ii. compacting a second layer (101b), or more layers, of *Sphagnum* biomass on top of
the first layer of *Sphagnum* biomass, the bulk density of these layers of *Sphagnum* biomass being lower than the bulk density of the first layer of *Sphagnum* biomass growth, and wherein the layers are arranged on top of each other in such a way that their bulk densities decrease from bottom towards top, and wherein the bulk density of the uppermost layer of *Sphagnum* biomass is at least 50 g dm⁻³,
iii. saturating the compacted *Sphagnum* biomass in the mold by adding water until mass flow passes through the one or more through-holes and
iv. removing the substrate from the mold by turning the mold over in wet state.

2. A method as defined in claim 1 **characterized in that** it further comprises v. drying the substrate to a lower water content.

3. A method as defined in claim 1 or 2, **characterized in that** the layers are constituted by a biomass of the same species of *Sphagnum.*

4. A method as defined in claim 1 or 2, **characterized in that** the layers are constituted by a biomass of different species of *Sphagnum.*

5. A method as defined in any of claims 1 to 4, **characterized in that** the water used for the saturation contains plant nutrients.

6. A moss growth substrate, **characterized in that** it is obtainable by a method according to any of claims 1 to 5.

7. A method of growing a plant, **characterized in that** the plant is planted in a moss growth substrate according to claim 6.

## Patentansprüche

1. Verfahren zur Herstellung eines Mooswachstumssubstrats, **dadurch gekennzeichnet, dass** es Folgendes umfasst
i. Verdichten einer ersten Schicht (101a) *Sphagnum-*Biomasse auf eine Rohdichte von höchstens 80 g dm⁻³, wobei die Rohdichte eine Dichte einer Schicht ist, die nach 24-stündigem Trocknen bei 65 °C gewogen wird, und wobei das Verdichten in einer Form erfolgt, deren Boden ein oder mehrere Durchgangslöcher umfasst,
ii. Verdichten einer zweiten Schicht (101b) oder mehrerer Schichten *Sphagnum*-Biomasse auf der ersten Schicht aus *Sphagnum*-Biomasse, wobei die Rohdichte dieser Schichten aus *Sphagnum*-Biomasse geringer ist als die Rohdichte der ersten Schicht aus *Sphagnum*-Biomasse, und wobei die Schichten so übereinander angeordnet sind, dass ihre Rohdichten von unten nach oben abnehmen, und wobei die Rohdichte der obersten Schicht *Sphagnum*-Biomasse mindestens 50 g dm⁻³ beträgt,
iii. Sättigen der verdichteten *Sphagnum*-Biomasse in der Form durch Hinzufügen von Wasser, bis der Massenstrom durch das eine oder die mehreren Durchgangslöcher fließt, und
iv. Entfernen des Substrats aus der Form durch Umdrehen der Form im nassen Zustand.

2. Verfahren wie in Anspruch 1 definiert, **dadurch gekennzeichnet, dass** es ferner Folgendes umfasst
v. Trocknen des Substrats auf einen niedrigeren Wassergehalt.

3. Verfahren wie in Anspruch 1 oder 2 definiert, **dadurch gekennzeichnet, dass** die Schichten aus einer Biomasse der gleichen *Sphagnum*-Spezies bestehen.

4. Verfahren wie in Anspruch 1 oder 2, definiert, **dadurch gekennzeichnet, dass** die Schichten aus einer Biomasse verschiedener *Sphagnum-*Spezies bestehen.

5. Verfahren wie in den Ansprüchen 1 bis 4 definiert, **dadurch gekennzeichnet, dass** das zur Sättigung verwendete Wasser Pflanzennährstoffe enthält.

6. Mooswachstumssubstrat, **dadurch gekennzeichnet, dass** es durch ein Verfahren nach einem der Ansprüche 1 bis 5 erhältlich ist.

7. Verfahren zum Züchten einer Pflanze, **dadurch gekennzeichnet, dass** die Pflanze in ein Mooswachstumssubstrat nach Anspruch 6 gepflanzt wird.

## Revendications

1. Procédé de fabrication d'un substrat de croissance de mousse, **caractérisé en ce qu'**il comprend
i. le compactage d'une première couche (101a) de biomasse de sphaigne à une densité apparente d'au plus 80 g dm⁻³ dans lequel la densité apparente est une densité d'une couche pesée après séchage à 65 °C pendant 24 h et dans lequel le compactage a lieu dans un moule, dont le fond comprend un ou plusieurs trous traversants,
ii. le compactage d'une seconde couche (101b), ou de plusieurs couches, de biomasse de sphaigne pardessus la première couche de biomasse de sphaigne, la densité apparente de ces couches de biomasse de sphaigne étant inférieure à la densité apparente de la première couche de croissance de biomasse de sphaigne, et dans lequel les couches sont agencées sur les unes sur les autres de telle manière que leur densité apparente diminue du bas vers le haut, et dans lequel la densité apparente de la couche la plus élevée de la biomasse de sphaigne est d'au moins 50 g dm⁻³,
iii. la saturation de la biomasse de sphaigne compactée dans le moule par ajout d'eau jusqu'à ce que le débit massique passe à travers les un ou plusieurs trous traversants et
iv. le retrait du substrat du moule en retournant le moule à l'état mouillé.

2. Procédé selon la revendication 1 **caractérisé en ce qu'**il comprend en outre
v. le séchage du substrat jusqu'à une teneur en eau inférieure.

3. Procédé selon la revendication 1 ou 2, **caractérisé en ce que** les couches sont constituées par une biomasse de la même espèce de sphaigne.

4. Procédé selon la revendication 1 ou 2, **caractérisé en ce que** les couches sont constituées par une biomasse d'une espèce différente de sphaigne.

5. Procédé selon l'une quelconque des revendications 1 à 4, **caractérisé en ce que** l'eau utilisée pour la saturation contient des nutriments végétaux.

6. Substrat de croissance de mousse, **caractérisé en ce qu'**il peut être obtenu par un procédé selon l'une quelconque des revendications 1 à 5.

7. Procédé de culture d'une plante, **caractérisé en ce que** la plante est plantée dans un substrat de croissance de mousse selon la revendication 6.
